# EUROPÄISCHE PATENTSCHRIFT

(11) **EP 3 287 318 B1**
(45) Veröffentlichungstag und Bekanntmachung des Hinweises auf die Patenterteilung: **18.12.2019**
(21) Anmeldenummer: 17186076.0
(22) Anmeldetag: 13.08.2017
(51) Int. Cl.: B60P 7/08

(54) **TRANSPORT- UND LADUNGSSICHERUNG FÜR BEHÄLTER**
TRANSPORT AND LOAD SECURING DEVICE FOR CONTAINERS
FIXATION POUR LE TRANSPORT ET ARRIMAGE DU CHARGEMENT POUR CONTENANTS

(30) Priorität: 23.08.2016 DE 102016115569
(43) Veröffentlichungstag der Anmeldung: 28.02.2018
(73) Patentinhaber: Adolf Würth GmbH & Co. KG, 74653 Künzelsau (DE)
(72) Erfinder: Waizel, Valentin, 75031 Eppingen (DE); Schröter, Dirk, 74238 Krautheim (DE)
(74) Vertreter: Dilg, Haeusler, Schindelmann Patentanwaltsgesellschaft mbH

(56) Entgegenhaltungen:
- WO-A1-97/33770
- DE-B- 1 223 763
- US-A- 3 754 516
- US-A- 5 427 487

## Beschreibung

Die Erfindung betrifft eine Transport- und Ladungssicherung für Behälter und ein zugehöriges Verfahren. Eine gattungsgemäße Sicherung ist in US 3754516 A offenbart.

Um Behälter auf einer Ladefläche eines Fahrzeugs während der Fahrt zu sichern, sind verschiedene Transport- und Ladungssicherungen bekannt.

In einer ersten Variante werden Anti-Rutschmatten unter den Behältern und auf der Ladefläche angeordnet, um ein Verrutschen von Behältern auf der Ladefläche während des Transports zu vermeiden. Bei höheren Geschwindigkeiten des Fahrzeugs oder bei größeren Massen der Behälter können alternativ oder zusätzlich Spanngurte verwendet werden, um die Behälter auf der Ladefläche zu sichern.

In vielen gewerblichen Anwendungen, bspw. bei Handwerkern, sind die Behälter normiert und die Behälter haben ein Rastermaß, d.h. es gibt eine Art "Bausatz" an Behältern. Die Behälter weisen in der Regel die gleiche Funktion und das gleiche Aussehen aus, weisen jedoch unterschiedliche Größen auf, bspw. in der Grundfläche und/oder der Behälterhöhe. Die Behälter können dadurch vereinfacht gestapelt und/oder gelagert und/oder transportiert werden. Häufig wird ein Rastermaß für einen Satz von Behältern so gewählt, dass die Grundfläche eines Behälters ein ganzes Vielfaches der Grundfläche eines "Grundbehälters", d.h. eines kleinsten Behälters ist. Auf diese Weise können kleinere Behälter auf größere Behälter so angeordnet werden, dass die Grundfläche des größeren Behälters vollständig ausgenutzt ist, Beispielsweise können zwei ½-Behälter auf einem 1/1-Behälter gestellt werden, wodurch die Grundfläche des 1/1-Behälters vollständig ausgenutzt ist.

Ein Nachteil der bekannten Transport- und Ladungssicherungen ist, dass der Erfolg der Sicherung der Behälter stark von dem Anwender abhängig ist.

Bei Fahrzeugen, die genormte Behälter transportieren, ist eine einfache und verlässlich funktionierende Ladungs- und Transportsicherung der Behälter gewünscht.

Diese Aufgabe wird erfindungsgemäß zum einen durch den unabhängigen Vorrichtungsanspruch und zum anderen durch den unabhängigen Verfahrensanspruch gelöst.

Bevorzugt verlaufen die Fahrzeugtraversen und/oder die Behältertraversen jeweils parallel zueinander.

Mit Vorteil sind die Fahrzeugtraversen mittels einer Schraub- oder einer insbes. lösbaren Steckverbindung mit dem Fahrzeug verbunden.

Bevorzugt sind die Fahrzeugtraversen in Fahrtrichtung des Fahrzeugs, senkrecht dazu oder in einem beliebigen Winkel dazwischen angeordnet.

Mit Vorteil weisen die Fahrzeugtraversen in Längsrichtung jeweils ein Ende einer Steckverbindung auf, insbes. einer Schwalbenschwanzverbindung, so dass die Fahrzeugtraversen in Längsrichtung derselben miteinander steckbar verbindbar sind.

Bevorzugt bestehen die Fahrzeug- und/oder Behältertraversen aus Metall oder Kunststoff, insbes. CFKverstärkt.

Mit Vorteil weisen die Fahrzeugtraversen einen Einführabschnitt auf, um eine Behältertraverse zwischen benachbarten Fahrzeugtraversen einzuführen, und einen Hinterschnitt, um die Behältertraverse zwischen Fahrzeugtraverse und Ladefläche des Fahrzeugs zu verschieben.

Vorteilhaft sind die gegenüberliegenden Behältertraversen benachbarte Behältertraversen.

Bevorzugt sind die Behältertraversen senkrecht zu den Fahrzeugtraversen angeordnet.

Vorteilhaft sind die Behältertraversen spiegelsymmetrisch zur Längs- und/oder Querachse ausgebildet.

Ein Rastermaß der Eingriffschalen ist vorteilhaft auf ein Rastermaß der Behälterfüße der Behälter abgestimmt, damit alle Behälterfüße einer Seite des Behälters von einer Behältertraverse gehalten sind.

Bevorzugt sind Behältertraversen an dem Fahrzeug und/oder den Fahrzeugtraversen befestigt.

Mit Vorteil sind die Eingriffschalen ohne Hinterschnitt gebildet, um ein Verrutschen des Behälters parallel zu der Ladefläche zu verhindern.

Bevorzugt weisen die Eingriffschalen ein Vertikalhaltemittel auf, insbesondere einen Vorsprung, um ein Verschieben des Behälters senkrecht zur Ladefläche des Fahrzeugs zu verhindern.

Bevorzugt sind der Vorsprung in der Eingriffschale und ein korrespondierender Hinterschnitt im Behälterfuß von den Abmessungen her so aufeinander abgestimmt sind, dass der Behälterfuß zum einen von der zugehörigen Behältertraverse und zum anderen von der Ladefläche des Fahrzeugs abgestützt ist (doppelte Abstützung).

Das Fahrzeug kann ein LKW, ein Transporter, ein PKW oder ein Pritschenwagen sein.

Mit Vorteil ist der Behälter eine Lagerbox mit oder ohne Deckel.

Vorteilhaft ist der Querschnitt der Behälterfüße rund, bspw. kreisförmig oder elliptisch, oder polygonal, bspw. rechteckig oder quadratisch.

Bevorzugt durch Wiederholen der Schritte b) bis d) des unabhängigen Verfahrensanspruchs mit jeweils mindestens einer weiteren Behältertraverse mit zugehörigen Behälter kann mindestens ein weiterer Behälter an der Ladefläche gehalten werden.Weitere Merkmale, Einzelheiten und Vorzüge der Erfindung ergeben sich aus den Ansprüchen und der nachfolgenden Beschreibung bevorzugter Ausführungsformen sowie anhand der Zeichnung. Es zeigen:
- Fig. 1: a) eine Draufsicht, b) eine perspektivische und c) eine Seitenansicht einer ersten Fahrzeugtraverse,
- Fig. 2: a) eine Draufsicht, b) eine perspektivische und c) eine Seitenansicht einer zweiten Fahrzeugtraverse zur Verbindung mit der ersten Fahrzeugtraverse,
- Fig. 3: a) eine Draufsicht, b) eine Seitenansicht und c) eine perspektivische Ansicht einer Behältertraverse,
- Fig. 4: a) eine perspektivische, b) eine Draufsicht und c) eine Seitenansicht eines Behälterfusses eines Behälters für die erfindungsgemäße Transport- und Ladungssicherung,
- Fig. 5: a) eine Draufsicht, b) eine ersten Seitenansicht, c) eine zweite Seitenansicht und d) eine perspektivische Ansicht einer erfindungsgemäßen Transport- und Ladungssicherung für eine Ladefläche eines Fahrzeugs, wobei Behälterfüße von nicht dargestellten Behältern in derselben dargestellt sind,

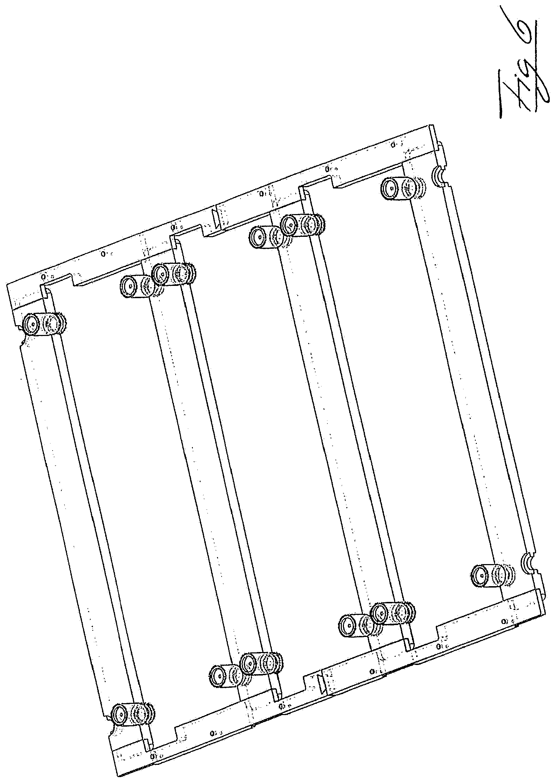

- Fig. 6: eine vergrößerte perspektivische Ansicht der Anordnung der Fig. 5, und
- Fig. 7: eine perspektivische Ansicht eines Pritschenwagens mit einer Ladefläche, auf der eine erfindungsgemäße Transport- und Ladungssicherung angeordnet ist, in der ein Behälter gesichert ist, von zwei nicht dargestellten Behältern sind nur die Behälterfüße dargestellt.

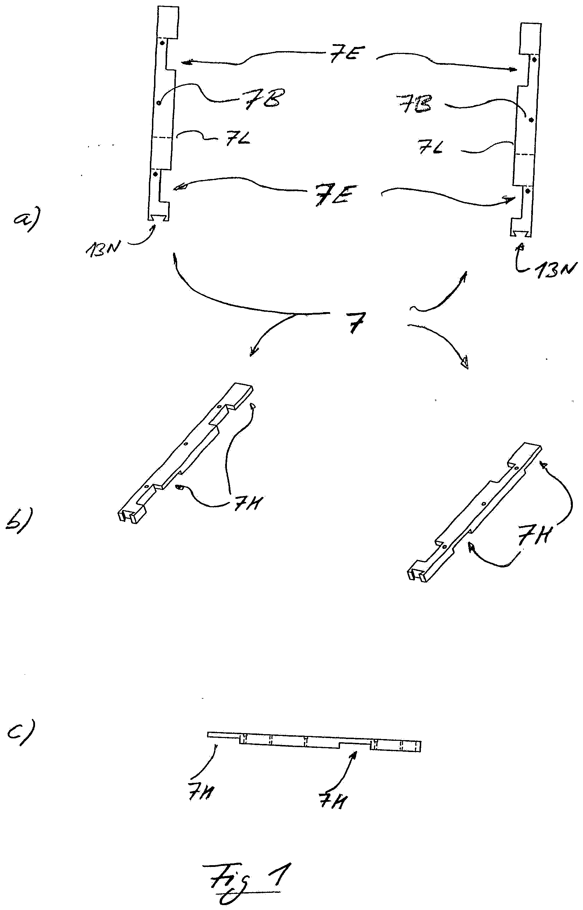

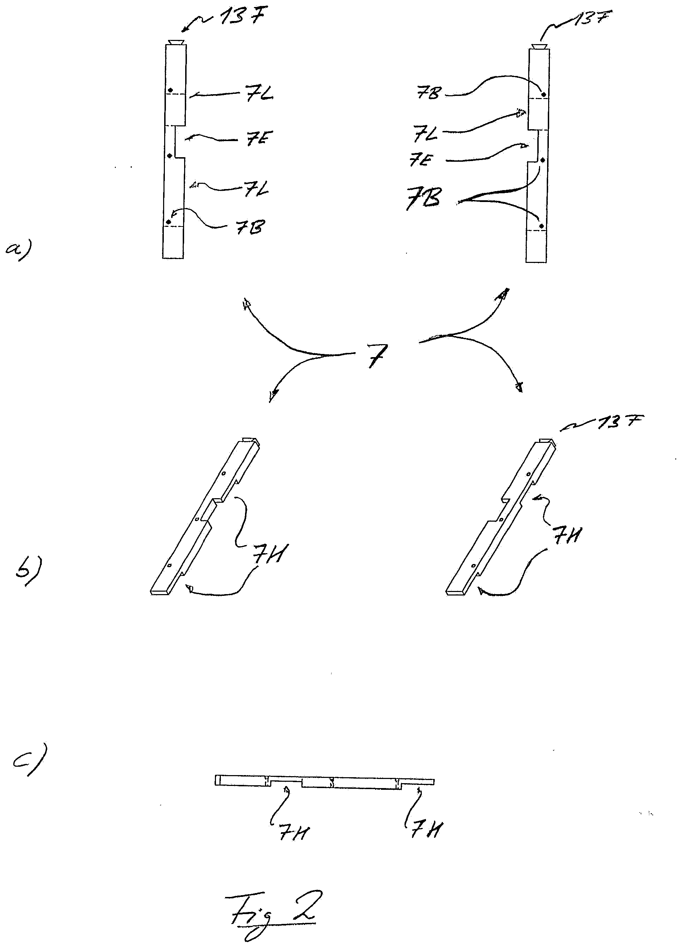

Fig. 1 zeigt verschiedene Ansichten eines Paares von ersten Fahrzeugtraversen 7 und Figur 2 zeigt verschiedene Ansichten eines Paares von zweiten Fahrzeugtraversen 7. Die beiden Paare von Fahrzeugtraversen 7 sind jeweils über eine Schwalbenschwanzverbindung 13 miteinander verbindbar. Zu diesem Zweck weisen die Fahrzeugtraversen 7 der Fig. 1 eine Nut 13N und die Fahrzeugtraversen 7 der Fig. 2 eine Feder 13F einer Schwalbenschwanzverbindung 13 auf. Sind die beiden Paare von Fahrzeugtraversen 7 der Figuren 1 und 2 über die Schwalbenschwanzverbindung miteinander verbunden, werden sie auf der Ladefläche 5L eines Fahrzeugs 5 befestigt, wobei die Länge der zusammengesetzten Fahrzeugtraversen 7 einer gewünschten Länge entspricht und bspw. der Länge der Ladefläche 5L in Fahrtrichtung 5F des Fahrzeugs 5 entspricht.

Die ersten und zweiten Paare an Fahrzeugtraversen 7 sind, wie aus Fig. 1a) und 2a) ersichtlich, jeweils spiegelsymmetrisch aufgebaut. Die Fahrzeugtraversen sind vorliegend als Hohlprofile aus Metall gebildet, alternativ bspw. aus einem Kunststoff, insbesondere einem verstärkten Kunststoff.

In den Fahrzeugtraversen 7 sind durchgehende Bohrungen 7B vorgesehen, um die Fahrzeugtraversen 7 mittels Schrauben an der Ladefläche 5L des Fahrzeugs 5 zu befestigen.

An gegenüberliegenden Längsseiten 7L der Paare der Fahrzeugtraversen der Fig. 1a) und 2a) sind Einführabschnitte 7E vorgesehen, um eine Behältertraverse 9 zwischen diesen anzuordnen, wie weiter unter beschrieben.

Ferner weisen die Fahrzeugtraversen 7 den Einführabschnitten 7E zugeordnete Hinterschnitte 7H auf, entlang derer die Behältertraversen 9 verschieblich sind, wie ebenfalls weiter unten beschrieben.

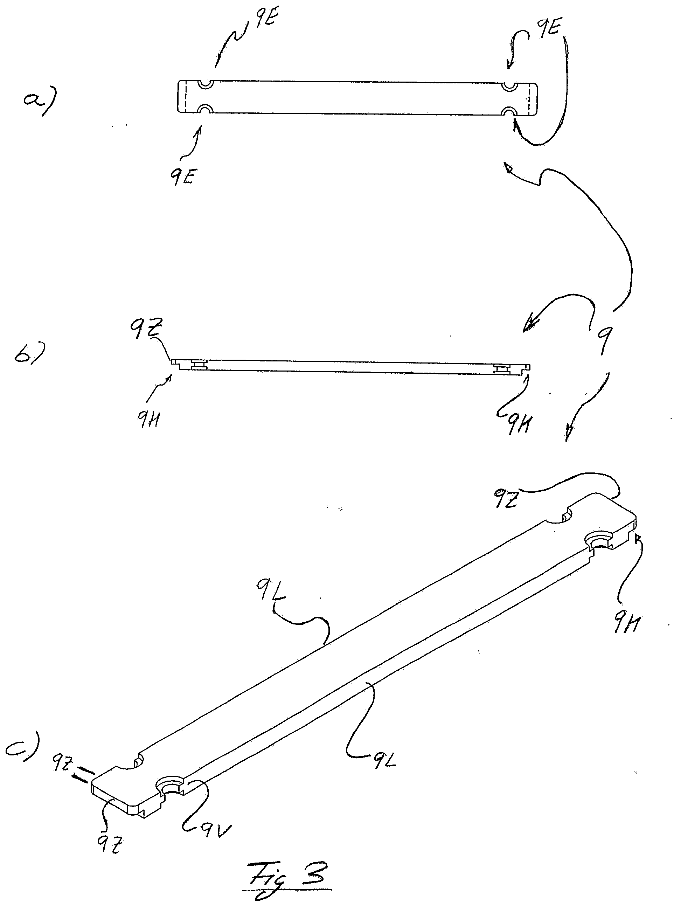

In Fig. 3 sind verschiedene Ansichten der Behältertraverse 9 zur Anordnung zwischen zwei Fahrzeugtraversen 7 gezeigt. Die Behältertraverse 9 ist ebenfalls ein metallisches Hohlprofil.

An gegenüberliegenden Enden weist die Behältertraverse 9 jeweils einen Hinterschnitt 9H auf, wodurch ein in Längsrichtung vorstehender Zwischenabschnitt 9Z gebildet ist. Der Zwischenabschnitt ist vorgesehen zur Anordnung zwischen der Ladefläche 5L und einer Fahrzeugtraverse 7 im Bereich des Hinterschnitts 7H, wie weiter unten beschrieben. Die in Fig. 3b) gezeigte vertikale Höhe des Zwischenabschnitts 9Z senkrecht zur Längsrichtung der Behältertraverse 9 entspricht daher der Höhe des Hinterschnitts 7H der Fahrzeugtraverse.

An gegenüberliegenden Längsseiten 9L der Behältertraverse sind gegenüberliegende Eingriffschalen 9E gebildet, die halbkreisförmig gebildet sind. Die Eingriffschalen 9E weisen im Wesentlichen die Form eines Halbzylinders auf, wobei jedoch in der Mitte desselben ein halbkreisförmiger Vorsprung 9V gebildet ist. Mit diesen Eingriffschalen ist es möglich, einen Behälterfuß 3F eines Behälters 3 halbkreisförmig zu umschließen, wie weiter unten beschrieben.

Die Behältertraverse 9 ist entlang der Längsachse derselben symmetrisch aufgebaut. Ferner ist die Behältertraverse 9 senkrecht zu einer Achse symmetrisch, die die Behältertraverse 9 in Längsrichtung mittig teilt.

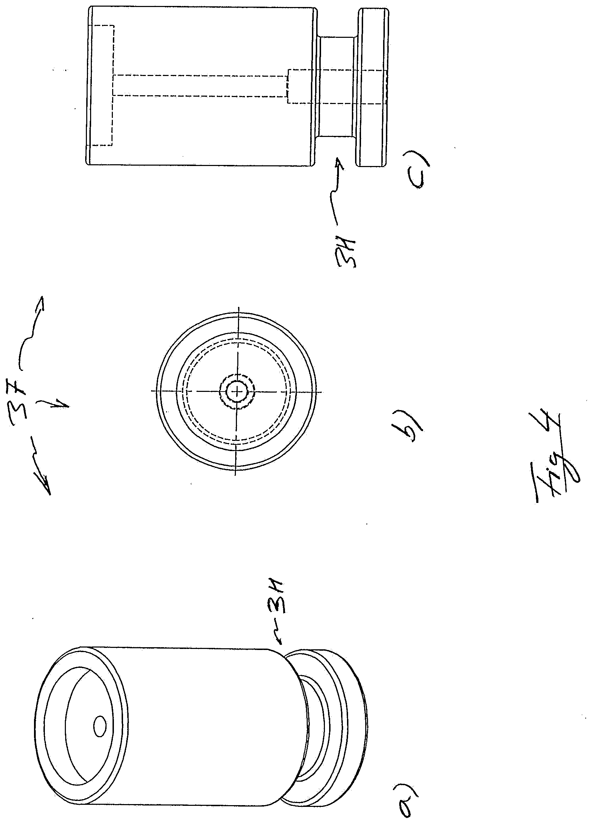

Fig. 4) zeigt verschieden Ansichten des Behälterfußes 3F eines Behälters 3. Der Behälterfuß 3F weist eine im Wesentlichen zylindersymmetrische Form auf. In dem in Figur 4a) oberen Ende ist eine Vertiefung gebildet, um den Behälterfuß 3F mit seinem Behälter 3 zu verbinden. In dem in Fig. 4a) unteren Ende ist ein ringförmiger Hinterschnitt 3H in dem Behälterfuß 3 gebildet. In den Hinterschnitt 3H greift der Vorsprung 9V der Eingriffschale 9E halbkreisförmig ein wie weiter unten beschrieben. Die axiale des Hinterschnitts 3H in Fig. 4c) entspricht der Dicke des Vorsprungs 9V in derselben Richtung.

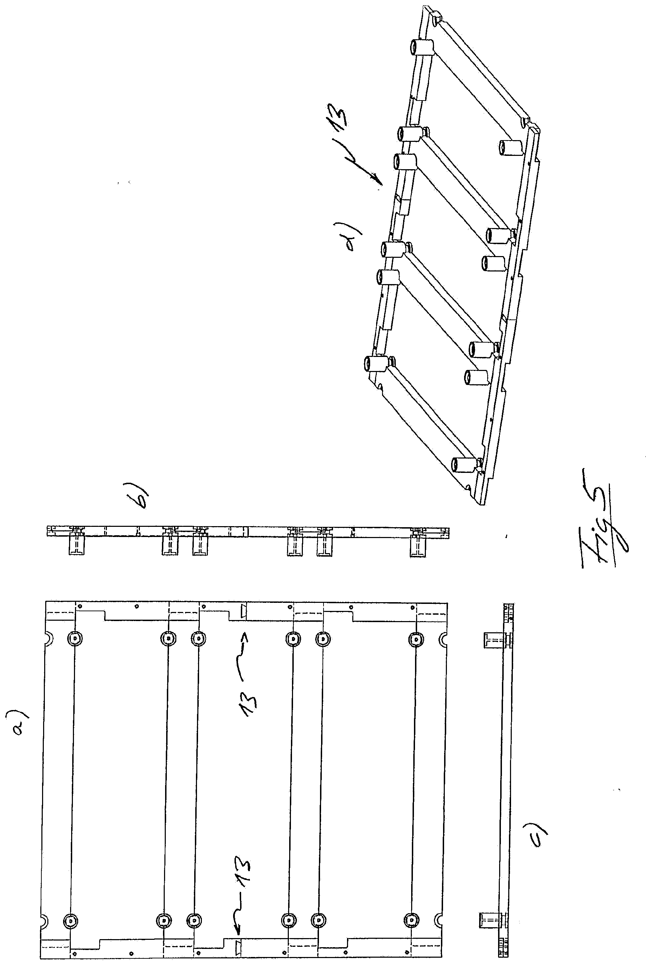

Die Figuren 5) und 6) zeigen verschiedene Ansichten der Transport- und Ladungssicherung 1, wobei zum einfacheren Verständnis Behälterfüße 3 von nicht dargestellten Behältern 3 ebenfalls gezeigt sind.

Das Paar von ersten Fahrzeugtraversen 7 der Fig. 1 ist mit dem Paar von zweiten Fahrzeugtraversen 7 über die Schwalbenschwanzverbindung 13 verbunden, d.h. die Nut 13N hat die Feder 13F aufgenommen, wodurch eine mechanische Steckverbindung zwischen den Fahrzeugtraversen 7 gebildet ist.

Wie insbesondere in Fig. 5a) gezeigt, umschließen die Eingriffschalen 9E halbkreisförmig die Behälterfüße 3F, wobei der Vorsprung 9V in den Hinterschnitt 3H ebenfalls halbkreisförmig eingreift. Dadurch, dass die Dicke des Vorsprungs 9V der Höhe des Hinterschnitts 3H entspricht, drückt jeder Behälterfuß 3F zum einen mit seinem Hinterschnitt 3H auf den Vorsprung 9V und zum anderen mit seinem freien Ende auf die Ladefläche 5L des Fahrzeugs 5.

Dadurch, dass der Vorsprung 9V in den Hinterschnitt 3H greift, ist der Behälterfuß 3F in axialer Richtung desselben nicht mehr verschieblich. Mit anderen Worten ist der Behälterfuß 3F in axialer Richtung sicher gehalten und nicht verschieblich. Während eines Transports von Behältern 3 mit einem Fahrzeug 5 kann auf diese Weise das Abheben von Behältern 3 von der Ladefläche 5L des Fahrzeugs 5 verhindert werden.

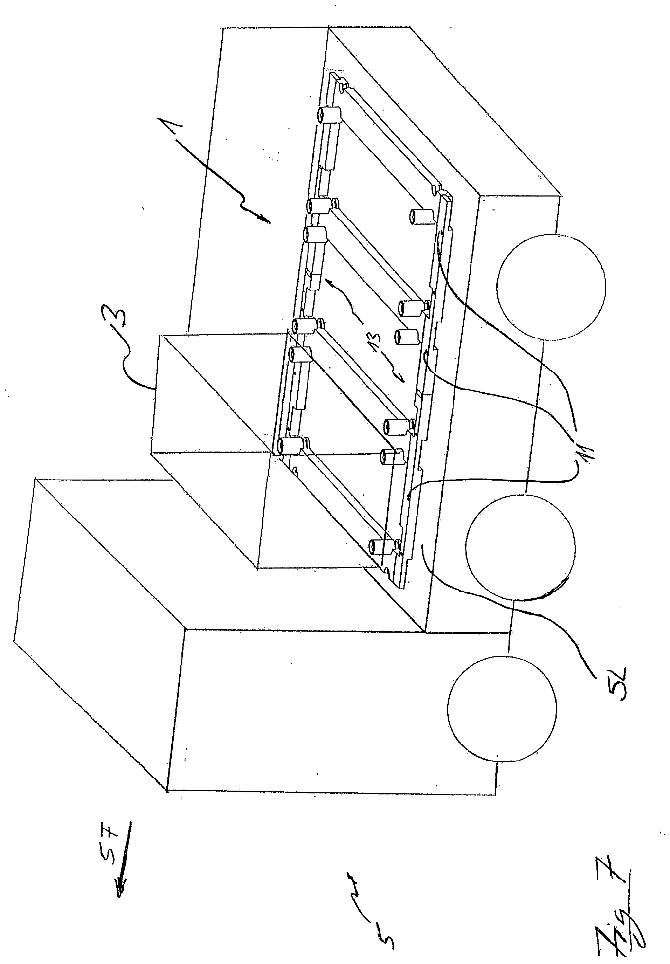

Um die Transport- und Ladungssicherung von Behältern 3 an einem Fahrzeug 5 vorzunehmen, wird unter Bezug auf Fig. 7) wie folgt vorgegangen:
Das in Fig. 7) gezeigte Pritschenfahrzeug 5 weist eine Ladefläche 5L auf. Der Pfeil 5F zeigt die Fahrtrichtung des Fahrzeugs 5 an, wenn das Fahrzeug 5 vorwärts fährt.

In einem ersten Schritt wird das Paar von ersten Fahrzeugtraversen 7 der Fig. 1 mit dem Paar von zweiten Fahrzeugtraversen 7 der Fig. 2 mittels der Schwalbenschwanzverbindung 13 mechanisch verbunden.

In einem zweiten Schritt werden die miteinander verbundenen Fahrzeugtraversen 7 auf der Ladefläche 5L des Fahrzeugs parallel zueinander angeordnet, wobei der relative Abstand zueinander von der Länge der Behältertraversen 9 abhängt.

In einem dritten Schritt werden die Fahrzeugtraversen 7 fest mit der Ladefläche 5L des Fahrzeugs 5 verbunden. Vorliegend werden Schrauben durch die Durchgangsbohrungen 7B der Fahrzeugtraverse 7 in die Ladefläche 5L geschraubt, um eine Schraubverbindung 11 zwischen den Fahrzeugtraversen 7 und dem Fahrzeug 5 zu bilden. Alternative mechanische Verbindungen sind möglich. Beispielsweise könnte eine Steckverbindung zwischen den Fahrzeugtraversen 7 und der Ladefläche 5L gebildet sein.

In einem vierten Schritt wird eine erste Behältertraverse 9 zwischen den Fahrzeugtraversen 7 angeordnet, wobei die Zwischenabschnitte 9Z der Behältertraverse 9 in den Einführabschnitten 7E der Fahrzeugtraverse 7 angeordnet sind. Die Behältertraverse 9 wird in einer Orientierung auf die Ladefläche 5L abgesenkt, die der Orientierung der Fig. 3c) entspricht, wobei Behältertraverse 9 jedoch um 180° entlang der Längsachse gedreht ist.

In einem fünften Schritt wird die Behältertraverse 9 in Fahrtrichtung 5F so weit verschoben, dass der Zwischenabschnitt 9Z vollständig im Bereich des Hinterschnitts 7H der Fahrzeugtraverse angeordnet ist und somit zwischen der Ladefläche 5L und der Fahrzeugtraverse 7 angeordnet ist. Da die Dicke des Zwischenabschnitts 9Z der Höhe des Hinterschnitts 7H an dieser Stelle entspricht, ist eine Verschiebung der Behältertraverse 9 senkrecht zur Ladefläche 5L nicht möglich.

In einem sechsten Schritt wird die Behältertraverse 9 in dieser Position befestigt, vorliegend werden Schrauben durch die Behältertraverse 9 und in die Ladefläche 5L des Fahrzeugs geschraubt. Alternativ oder zusätzlich kann die Behältertraverse 9 mit der Fahrzeugtraverse 7 verschraubt werden. Ferner können Rast- oder Steckverbindungen auf bekannte Weise zwischen der Behältertraverse 9 und der Fahrzeugtraverse 7 gebildet sein.

In einem siebten Schritt wird ein Behälter 3 mit Behälterfüßen 3F in den vier Ecken seiner Grundfläche so weit in Fahrtrichtung 5F auf der Ladefläche 5L verschoben, bis die Behälterfüße 5F in die Eingriffschalen 9E der Behältertraverse 9 greifen. Wie oben beschrieben, umschließen die Eingriffschalen 9E jeweils halbkreisförmig den Behälterfuß 3F, wobei der Vorsprung 9V in den Hinterschnitt 3H greift.

In einem achten Schritt wird nun eine weitere Behältertraverse 9 zwischen den Fahrzeugtraversen 7 angeordnet, auf die Ladefläche 5L abgesenkt und in Fahrtrichtung 5F verschoben, wie dies für die erste Behältertraverse 9 oben beschrieben ist, bis die zweite Behältertraverse 9 mit ihren Eingriffschalen 9E an den Behälterfüßen 3F anschlägt. In dieser Position umgreifen die Eingriffschalen 9E wieder die Behälterfüße 3F halbkreisförmig, wobei der Vorsprung 9V in den Hinterschnitt 3H greift, wie oben beschrieben.

In einem neunten Schritt wird die zweite Behältertraverse 9 in dieser Position befestigt. Die Befestigung erfolgt dabei wie zuvor für die Befestigung der ersten Behältertraverse 9 beschrieben, d.h. vorliegend mittels einer Verschraubung.

Der Behälter 3 ist nun durch die Transport- und Ladungssicherung 1 an dem Fahrzeug 5 gehalten: Durch die Zylinderform der Eingriffschalen 9E und der Behälterfüße 3F ist eine Verschiebung des Behälters 3 in der Ebene der Ladefläche 5L verhindert. Durch den Vorsprung 9V in der Behältertraverse und den Hinterschnitt 3H in dem Behälterfuß 3 ist auch eine Verschiebung des Behälters 3 senkrecht zur Ladefläche 5L verhindert.

Um einen weiteren Behälter 3 auf der Ladefläche 5L zu sichern, werden die oben beschriebenen Schritte sieben bis neun zur Befestigung des ersten Behälters wiederholt.

In der vorliegenden Ausführungsform wurde als Vertikalhaltemittel der Hinterschnitt 3H und der Vorsprung 9V gewählt. Alternative Ausführungsformen des Vertikalhaltemittel sind möglich. In einer ersten Variante ist der Hinterschnitt in der Eingriffschale und der Vorsprung an dem Behälterfuß gebildet. In einer weiteren Variante können zwei oder mehr Hinterschnitte mit einer entsprechenden Anzahl von Vorsprüngen zusammen arbeiten, wobei die Hinterschnitte sowohl in den Behälterfüßen als auch in den Eingriffschalen gebildet sein können (und entsprechend die Vorsprünge in den Eingriffschalen bzw. den Behälterfüßen). Alternativ zu ringförmigen Vorsprüngen oder Hinterschnitten sind kegelförmige Hinterschnitte bzw. Vorsprünge denkbar oder Kombinationen von ring- und kegelfömigen Hinterschnitten und Vorsprüngen.

Vorliegend umgreifen die Eingriffschalen die Behälterfüße halbkreisförmig, d.h. in einem Winkelbereich von 180°. Andere Winkelbereiche sind möglich, wobei der Winkelbereich bevorzugt größer als 90° sein sollte, um einen guten bzw. ausreichenden Halt zu erreichen.

### Bezugszeichenliste

- 1: Transport- und Ladungssicherung
- 3: Behälter
- 3F: Behälterfuß
- 3H: Hinterschnitt im Behälterfuß
- 5: Fahrzeug
- 5L: Ladefläche des Fahrzeugs
- 5F: Fahrtrichtung des Fahrzeugs
- 7: Fahrzeugtraverse
- 7B: Bohrung (Durchgangsloch)
- 7H: Hinterschnitt
- 7L: Längsseite der Fahrzeugtraverse
- 7E: Einführabschnitt der Fahrzeugtraverse
- 9: Behältertraverse
- 9H: Hinterschnitt
- 9L: Längsseite Behältertraverse
- 9E: Eingriffschale für Behälterfuß
- 9V: Vorsprung in der Eingriffschale
- 9Z: Zwischenabschnitt
- 11: Schraubverbindung
- 13: Schwalbenschwanzverbindung
- 13N: Nut einer Schwalbenschwanzverbindung
- 13F: Feder einer Schwalbenschwanzverbindung

## Patentansprüche

1. Transport- und Ladungssicherung (1) für Behälter (3) mit Behälterfüßen (3F) auf einer Ladefläche (5L) eines Fahrzeugs (5), insbesondere eines Kraftfahrzeugs, mit sich paarweise gegenüberliegenden Fahrzeugtraversen (7), die fest mit dem Fahrzeug (5) verbunden sind, sich paarweise gegenüberliegenden Behältertraversen (9), die sich zwischen den Fahrzeugtraversen (7) erstrecken, wobei die Behältertraverse (9) an ihren Längsseiten (9L) jeweils mindestens eine Eingriffschale (9E) für jeweils einen Behälterfuß (3F) aufweisen, um mit der Eingriffschale (9E) einen Behälterfuß (3F) abschnittsweise formschlüssig zu halten, und Behälterfüße (3F) an gegenüberliegenden Seiten des Behälters (3) von Eingriffschalen (9E) gegenüberliegender Behältertraversen (9) gehalten sind, **dadurch gekennzeichnet, dass** die Behältertraversen (9) senkrecht zu den Fahrzeugtraversen (7) angeordnet sind.

2. Transport- und Ladungssicherung nach Anspruch 1, **dadurch gekennzeichnet, dass** Fahrzeugtraversen (7) und/oder Behältertraversen (9) jeweils parallel zueinander verlaufen.

3. Transport- und Ladungssicherung nach Anspruch 1 oder 2, **dadurch gekennzeichnet, dass** die Fahrzeugtraversen (7) mittels einer Schraub- oder einer insbes. lösbaren Steckverbindung (11) mit dem Fahrzeug (5) verbunden sind.

4. Transport- und Ladungssicherung nach einem der vorangehenden Ansprüche, **dadurch gekennzeichnet, dass** die Fahrzeugtraversen (7) in Fahrtrichtung (5F) des Fahrzeugs (5), senkrecht dazu oder in einem beliebigen Winkel dazwischen angeordnet sind.

5. Transport- und Ladungssicherung nach einem der vorangehenden Ansprüche, **dadurch gekennzeichnet, dass** die Fahrzeugtraversen (7) in Längsrichtung jeweils ein Ende einer Steckverbindung (13) aufweisen, insbes. einer Schwalbenschwanzverbindung, so dass die Fahrzeugtraversen (7) in Längsrichtung derselben miteinander steckbar verbindbar sind.

6. Transport- und Ladungssicherung nach einem der vorangehenden Ansprüche, **dadurch gekennzeichnet, dass** Fahrzeug- und/oder Behältertraversen (7, 9) aus Metall oder Kunststoff, insbes. CFKverstärkt, bestehen.

7. Transport- und Ladungssicherung nach einem der vorangehenden Ansprüche, **dadurch gekennzeichnet, dass** die Fahrzeugtraversen (7) einen Einführabschnitt (7E) aufweisen, um eine Behältertraverse (9) zwischen benachbarten Fahrzeugtraversen (7) einzuführen, und einen Hinterschnitt (7H), um die Behältertraverse (9) zwischen Fahrzeugtraverse (7) und Ladefläche (5L) des Fahrzeugs (5) zu verschieben.

8. Transport- und Ladungssicherung nach einem der vorangehenden Ansprüche, aufweisend zumindest eines der folgenden Merkmale:
wobei die gegenüberliegenden Behältertraversen (9) benachbarte Behältertraversen (9) sind;
wobei die Behältertraversen (9) spiegelsymmetrisch zur Längs- und/oder Querachse ausgebildet sind.

9. Transport- und Ladungssicherung nach einem der vorangehenden Ansprüche, **dadurch gekennzeichnet, dass** ein Rastermaß der Eingriffschalen (9E) auf ein Rastermaß der Behälterfüße (3F) der Behälter (3) abgestimmt ist, damit alle Behälterfüße (3F) einer Seite des Behälters (3) von einer Behältertraverse (9) gehalten sind.

10. Transport- und Ladungssicherung nach einem der vorangehenden Ansprüche, **dadurch gekennzeichnet, dass** die Behältertraversen (9) an dem Fahrzeug (5) und/oder den Fahrzeugtraversen (7) befestigt sind.

11. Transport- und Ladungssicherung nach einem der vorangehenden Ansprüche, **dadurch gekennzeichnet, dass** die Eingriffschalen (9E) ohne Hinterschnitt gebildet sind, um ein Verrutschen des Behälters (3) parallel zu der Ladefläche (5L) zu verhindern.

12. Transport- und Ladungssicherung nach einem der vorangehenden Ansprüche, **dadurch gekennzeichnet, dass** die Eingriffschalen (9E) ein Vertikalhaltemittel (9V), insbesondere einen Vorsprung (9V), aufweisen, um ein Verschieben des Behälters (3) senkrecht zur Ladefläche (5L) des Fahrzeugs (5) zu verhindern, wobei insbesondere der Vorsprung (9V) in der Eingriffschale (9E) und ein korrespondierender Hinterschnitt (3H) im Behälterfuß (3F) von den Abmessungen her so aufeinander abgestimmt sind, dass der Behälterfuß (3F) zum einen von der zugehörigen Behältertraverse (9) und zum anderen von der Ladefläche (5L) des Fahrzeugs abgestützt ist.

13. Transport- und Ladungssicherung nach einem der vorangehenden Ansprüche, aufweisen zumindest eines der folgenden Merkmale:
wobei Fahrzeug (5) ein LKW, ein Transporter, ein PKW oder ein Pritschenwagen ist;
wobei der Behälter (3) eine Lagerbox mit oder ohne Deckel ist;
wobei der Querschnitt der Behälterfüße (3F) rund, bspw. kreisförmig oder elliptisch, oder polygonal, bspw. rechteckig oder quadratisch, ist.

14. Verfahren zur Transport- und Ladungssicherung (1) eines Behälters (3) mit Behälterfüßen (3F) an einer Ladefläche (5L) eines Fahrzeugs (5), insbesondere einem Kraftfahrzeug, mit einer Transport- und Ladungssicherung gemäß Anspruch 1, umfassend:
a) Befestigen von gegenüberliegenden Fahrzeugtraversen (7) an der Ladefläche (5L),
b) Anordnen und Befestigen einer ersten Behältertraverse (9) zwischen den Fahrzeugtraversen (7),
c) Schieben von Behälterfüßen (3F) eines Behälters (3) an die Behältertraverse (9), um mit mind. einer Eingriffschale (9E) der ersten Behältertraverse (9) einen Behälterfuß (3F) abschnittsweise formschlüssig zu halten, und
d) Anordnen und Befestigen einer zweiten Behältertraverse (9) zwischen den Fahrzeugtraversen (7), um mit mind. einer Eingriffschale (9E) der zweiten Behältertraverse (9) einen Behälterfuß (3F) des Behälters (3) abschnittsweise formschlüssig zu halten;
**dadurch gekennzeichnet, dass** die Behältertraversen (9) senkrecht zu den Fahrzeugtraversen (7) angeordnet sind.

15. Verfahren nach vorhergehendem Anspruch, **gekennzeichnet durch** Wiederholen der Schritte b) bis d) mit jeweils mindestens einer weiteren Behältertraverse (9) mit zugehörigen Behälter (3), um mindestens einen weiteren Behälter (3) an der Ladefläche (5L) zu halten.

## Claims

1. Transport and load securing device (1) for containers (3) having container stands (3F) on a loading area (5L) of a vehicle (5), in particular a motor vehicle, having pairwisely opposing vehicle traverses (7), which are fixedly connected to the vehicle (5), pairwisely opposing container traverses (9), which extend between the vehicle traverses (7), wherein the container traverses (9) have at the longitudinal sides thereof respectively at least one engagement shell (9E) for respectively one container stand (3), so as to hold a container stand (3F) in sections with positive locking by the engagement shell (9E), and container stands (3F) at opposing sides of the container (3) are held by engagement shells (9E) of opposing container traverses (9),
**characterized in that** the container traverses (9) are arranged perpendicular to the vehicle traverses (7).

2. Transport and load securing device according to claim 1, **characterized in that** vehicle traverses (7) and/or container traverses (9) respectively run parallel to each other.

3. Transport and load securing device according to claim 1 or 2, **characterized in that** the vehicle traverses (7) are connected to the vehicle (5) by a bolted connection or a, in particular detachable, plug-in connection (11).

4. Transport and load securing device according to any one of the preceding claims, **characterized in that** the vehicle traverses (7) are arranged in a driving direction (5F) of the vehicle (5), perpendicular thereto, or at an arbitrary angle therebetween.

5. Transport and load securing device according to any one of the preceding claims, **characterized in that** the vehicle traverses (7) respectively have an end of a plug-in connection (13) in the longitudinal direction, in particular of a dovetail connection, such that the vehicle traverses (7) are connectable to each other in the longitudinal direction thereof.

6. Transport and load securing device according to any one of the preceding claims, **characterized in that** the vehicle and/or container traverses (7, 9) consist of metal or plastic, in particular carbon fiber reinforced.

7. Transport and load securing device according to any one of the preceding claims, **characterized in that** the vehicle traverses (7) have an insertion section (7E), in order to insert a container traverse (9) between neighbouring vehicle traverses (7), and an undercut (7H) in order to shift the container traverse (9) between the vehicle traverse (7) and the loading area (5L) of the vehicle (5).

8. Transport and load securing device according to any one of the preceding claims, having at least one of the following features:
wherein the opposing container traverses (9) are neighbouring container traverses (9);
wherein the container traverses (9) are formed mirror-symmetrically to the longitudinal and/or transverse axis.

9. Transport and load securing device according to any one of the preceding claims, **characterized in that** a modular dimension of the engagement shells (9E) is adjusted to a modular dimension of the container stands (3F) of the containers (3), so that all container stands (3F) of one side of the container (3) are held by a container traverse (9).

10. Transport and load securing device according to any one of the preceding claims, **characterized in that** the container traverses (9) are fixed to the vehicle (5) and/or the vehicle traverses (7).

11. Transport and load securing device according to any one of the preceding claims, **characterized in that** the engagement shells (9E) are formed without undercut, so as to prevent a slipping out of place of the container (3) parallel to the loading area (5L).

12. Transport and load securing device according to any one of the preceding claims, **characterized in that** the engagement shells (9E) have a vertical holding means (9V), in particular a protrusion (9V), so as to prevent a slipping out of place of the container (3) perpendicular to the loading area (5L) of the vehicle (5), wherein in particular the protrusion (9V) in the engagement shell (9E) and a corresponding undercut (3H) in the container stand (3F) are adjusted in terms of the dimensions, such that the container stand (3F) is supported on the one hand by the associated container traverse (9) and on the other hand by the loading area (5L) of the vehicle.

13. Transport and load securing device according to any one of the preceding claims, having at least one of the following features:
wherein the vehicle (5) is a heavy goods vehicle, a delivery van, a passenger car, or a platform truck;
wherein the container (5) is a storage box with or without lid;
wherein the cross section of the container stands (3F) is round, for example circular or elliptical, or polygonal, for example rectangular or quadratic.

14. Method for transport and load securing of a container (3) having container stands (3F) at a loading area (5L) of a vehicle (5), in particular a motor vehicle, by a transport and load securing device according to claim 1, the method having:
a) fixing of opposing vehicle traverses (7) to the loading area (5L);
b) arranging and fixing of a first container traverse (9) between the vehicle traverses (7);
c) shifting of container stands (3F) of a container (3) to the container traverse (9), so as to hold a container stand (3F) in sections with positive locking by at least one engagement shell (9E) of the first container traverse (9); and
d) arranging and fixing of a second container traverse (9) between the vehicle traverses (7), so as to hold a container stand (3F) of the container (3) in sections with positive locking by at least one engagement shell (9E) of the second container traverse (9);
**characterized in that** the container traverses (9) are arranged perpendicular to the vehicle traverses (7).

15. Method according to the preceding claim, **characterized by** repeating the steps b) to d) with respectively at least one further container traverse (9) with associated container (3), in order to hold at least one further container (3) at the loading area (5L).

## Revendications

1. Système de blocage pour le transport et le chargement (1) pour des contenants (3) avec des pieds de contenant (3F) sur une surface de chargement (5L) d'un véhicule (5), en particulier d'un véhicule automobile, avec des traverses de véhicule (7) se faisant face par paire, qui sont reliées de manière solidaire au véhicule (5), des traverses de contenant (9) se faisant face par paire, qui s'étendent entre les traverses de véhicule (7), dans lequel les traverses de contenant (9) présentent au niveau de leurs côtés longitudinaux (9L) respectivement au moins une coque de prise (9E) pour respectivement un pied de contenant (3F) pour maintenir par complémentarité de forme par endroits un pied de contenant (3F) avec la coque de prise (9E), et des pieds de contenant (3F) sont maintenus au niveau de côtés se faisant face du contenant (3) par des coques de prise (9E) de traverses de contenant (9) se faisant face,
**caractérisé en ce que**
les traverses de contenant (9) sont disposées de manière perpendiculaire par rapport aux traverses de véhicule (7).

2. Système de blocage pour le transport et le chargement selon la revendication 1, **caractérisé en ce que** des traverses de véhicule (7) et/ou des traverses de contenant (9) s'étendent respectivement de manière parallèle les unes par rapport aux autres.

3. Système de blocage pour le transport et le chargement selon la revendication 1 ou 2, **caractérisé en ce que** les traverses de véhicule (7) sont reliées au véhicule (5) au moyen d'une liaison par vissage ou d'une liaison par enfichage (11) en particulier amovible.

4. Système de blocage pour le transport et le chargement selon l'une quelconque des revendications précédentes, **caractérisé en ce que** les traverses de véhicule (7) sont disposées dans une direction de déplacement (5F) du véhicule (5) de manière perpendiculaire par rapport à celle-ci ou selon un angle quelconque de manière intercalée.

5. Système de blocage pour le transport et le chargement selon l'une quelconque des revendications précédentes, **caractérisé en ce que** les traverses de véhicule (7) présentent dans le sens longitudinal respectivement une extrémité d'une liaison par enfichage (13), en particulier d'une liaison en queue d'aronde de sorte que les traverses de véhicule (7) peuvent être reliées de manière enfichable les unes aux autres dans le sens longitudinal de celles-ci.

6. Système de blocage pour le transport et le chargement selon l'une quelconque des revendications précédentes, **caractérisé en ce que** des traverses de véhicule et/ou de contenant (7, 9) sont constituées de métal ou de matière plastique, en particulier sont renforcées par des matières plastiques renforcées par des fibres de carbone.

7. Système de blocage pour le transport et le chargement selon l'une quelconque des revendications précédentes, **caractérisé en ce que** les traverses de véhicule (7) présentent une section d'introduction (7E) pour introduire une traverse de contenant (9) entre des traverses de véhicule (7) adjacentes, et une contre-dépouille (7H) pour faire coulisser la traverse de contenant (9) entre une traverse de véhicule (7) et la surface de chargement (5L) du véhicule (5).

8. Système de blocage pour le transport et le chargement selon l'une quelconque des revendications précédentes, présentant au moins une des caractéristiques suivantes :
dans lequel les traverses de contenant (9) se faisant face sont des traverses de contenant (9) adjacentes ;
dans lequel les traverses de contenant (9) sont réalisées de manière symétrique en miroir par rapport à l'axe longitudinal et/ou transversal.

9. Système de blocage pour le transport et le chargement selon l'une quelconque des revendications précédentes, **caractérisé en ce qu'**un pas des coques de prise (9E) est adapté à un pas des pieds de contenant (3F) des contenants (3) afin que tous les pieds de contenant (3F) d'un côté du contenant (3) soient maintenus par une traverse de contenant (9).

10. Système de blocage pour le transport et le chargement selon l'une quelconque des revendications précédentes, **caractérisé en ce que** les traverses de contenant (9) sont fixées au niveau du véhicule (5) et/ou au niveau des traverses de véhicule (7).

11. Système de blocage pour le transport et le chargement selon l'une quelconque des revendications précédentes, **caractérisé en ce que** les coques de prise (9E) sont formées sans contre-dépouille pour empêcher tout glissement du contenant (3) de manière parallèle par rapport à la surface de chargement (5L).

12. Système de blocage pour le transport et le chargement selon l'une quelconque des revendications précédentes, **caractérisé en ce que** les coques de prise (9E) présentent un moyen de maintien vertical (9V), en particulier une partie faisant saillie (9V), pour empêcher tout coulissement du contenant (3) de manière perpendiculaire par rapport à la surface de chargement (5L) du véhicule (5), dans lequel en particulier la partie faisant saillie (9V) dans la coque de prise (9E) et une contre-dépouille (3H) correspondante dans le pied de contenant (3F) sont adaptées l'une à l'autre sur le plan des dimensions de telle sorte que le pied de contenant (3F) est soutenu d'une part par la traverse de contenant (9) associée et d'autre part par la surface de chargement (5L) du véhicule.

13. Système de blocage pour le transport et le chargement selon l'une quelconque des revendications précédentes, qui présente au moins une des caractéristiques suivantes :
dans lequel le véhicule (5) est un poids lourd, un transporteur, un véhicule de tourisme ou un camion à plateau ;
dans lequel le contenant (3) est un boîtier de stockage avec ou sans couvercle ; et
dans lequel la section transversale des pieds de contenant (3F) est ronde ou circulaire ou de forme elliptique ou polygonale ou rectangulaire ou carrée.

14. Procédé servant au blocage pour le transport et le chargement (1) d'un contenant (3) avec des pieds de contenant (3F) au niveau d'une surface de chargement (5L) d'un véhicule (5), en particulier d'un véhicule automobile, avec un système de blocage pour le transport et le chargement selon la revendication 1, comprenant :
a) la fixation de traverses de véhicule (7) se faisant dace au niveau de la surface de chargement (5L) ;
b) la disposition et la fixation d'une première traverse de contenant (9) entre les traverses de véhicule (7) ;
c) le glissement de pieds de contenant (3F) d'un contenant (3) au niveau de la traverse de contenant (9), pour maintenir par complémentarité de forme par endroits avec au moins une coque de prise (9E) de la première traverse de contenant (9) un pied de contenant (3F), et
d) la disposition et la fixation d'une deuxième traverse de contenant (9) entre les traverses de véhicule (7) pour maintenir par complémentarité de forme par endroits avec au moins une coque de prise (9E) de la deuxième traverse de contenant (9) un pied de contenant (3F) du contenant (3),
**caractérisé en ce que**
les traverses de contenant (9) sont disposées de manière perpendiculaire par rapport aux traverses de véhicule (7).

15. Procédé selon la revendication précédente, **caractérisé par** la répétition des étapes b) à d) avec respectivement au moins une autre traverse de contenant (9) avec le contenant (3) associé pour maintenir au moins un autre contenant (3) au niveau de la surface de chargement (5L).
